Europäisches Patentamt

(19) European Patent Office

Office européen des brevets

(11) Numéro de publication : **0 305 266 B1**

(12) **FASCICULE DE BREVET EUROPEEN**

(45) Date de publication du fascicule du brevet :
**17.04.91 Bulletin 91/16**

(51) Int. Cl.$^5$ : **G01M 10/00**

(21) Numéro de dépôt : **88402087.6**

(22) Date de dépôt : **11.08.88**

(54) Dispositif de mesure du sillage d'une maquette navigante.

---

(30) Priorité : **13.08.87 FR 8711521**

(43) Date de publication de la demande :
**01.03.89 Bulletin 89/09**

(45) Mention de la délivrance du brevet :
**17.04.91 Bulletin 91/16**

(84) Etats contractants désignés :
**DE GB IT NL SE**

(56) Documents cités :
**SOVIET INVENTIONS ILLUSTRATED, semaine
K43, 7 décembre 1983, Derwent Publications
Ltd, Londres, GB; & SU-A-985 819 (AS UKR
METALLOPHYS) 30-12-1982**

(73) Titulaire : **ETAT-FRANCAIS représenté par le
DELEGUE GENERAL POUR L'ARMEMENT
(DPAG)
Bureau des Brevets et Inventions de la
Délégation Générale pour l'Armement 26,
Boulevard Victor
F-75996 Paris Armées (FR)**

(72) Inventeur : **Le Guet, Pierre.Loic
15 Avenue de la Mutualité
F-91140 Bures/Yvette (FR)**
Inventeur : **Dern, Jean-Claude
187 rue de Javel
F-75015 Paris (FR)**

---

EP 0 305 266 B1

## Description

La présente invention se rapporte à un dispositif de mesure du sillage d'une maquette navigante dans un bassin d'essais équipé d'une plate forme mobile capable de se déplacer pour poursuivre la maquette dans la même direction et à la même vitesse que celle-ci.

La mesure du sillage d'une maquette de navire à partir de la forme du champ de vagues créé par le déplacement de cette dernière dans le bassin d'essais présente d'importantes difficultés en raison de l'étendue du champ à surveiller (plusieurs mètres carrés) et du grand nombre de points de mesure à enregistrer.

L'invention a pour but de remédier à ces difficultés grâce à un dispositif de mesure ponctuelle du niveau de l'eau, conçu pour permettre la détermination de la hauteur variable d'une région ponctuelle de la surface de l'eau, ce dispositif fonctionnant sans contact matériel avec l'eau et étant animé d'un mouvement de balayage.

Selon l'invention, ce dispositif comprend au moins une tête de mesure optique ponctuelle du niveau d'eau porté par la plate-forme et susceptible de se déplacer horizontalement par rapport à celle-ci en une direction transversale par rapport à la direction de son mouvement de poursuite de la maquette de façon à fournir, par balayage transversal, un relevé des ondulations de la surface de l'eau dues au sillage de la maquette dans un plan vertical parallèle à ladite direction transversale, laquelle est, de préférence, perpendiculaire à la direction du mouvement de poursuite de la plate-forme.

Un tel dispositif apporte une solution au problème posé, laquelle consiste, après avoir fait l'hypothèse que le champ de vagues dû au sillage est stationnaire dans un repère lié à la plate-forme, à réaliser une série de mesures ponctuelles de la hauteur de l'eau suivant un axe transversal par rapport à la direction d'évolution de la maquette, de préférence perpendiculaire à cette direction.

Avantageusement, le dispositif comprend un groupe de plusieurs têtes de mesure, de préférence en nombre supérieur à trois, juxtaposées suivant la direction du mouvement de poursuite de la plate-forme, qui fournissent un relevé desdites ondulations dans autant de plans verticaux parallèles adjacents. Cette disposition permet de réaliser la mesure simultanée de la hauteur de l'eau en un nombre de points au moins égal à quatre.

Dans une forme d'exécution préférée, chaque tête de mesure comprend un laser émettant un faisceau lumineux, de préférence vertical, qui frappe la surface de l'eau en y formant une tache lumineuse, et une caméra à surface sensible opto-électronique dont l'axe optique, dirigé, de préférence obliquement, vers la position moyenne de ladite tache lumineuse, fait un angle fixe avec le faisceau laser, et qui fournit un signal de sortie traduisant l'écart de l'image de la tache formée sur sa surface sensible par rapport à son axe optique, ce signal étant traité de manière à en déduire par calcul la hauteur variable de la tache à la surface de l'eau agitée.

Afin d'accroître la visibilité de la tache lumineuse au point d'impact de chaque faisceau laser sur la surface de l'eau, il est utile d'associer un dispositif pulvérisateur qui projette des gouttelettes de liquide sur la surface de l'eau dans la région de la tache lumineuse ou des taches lumineuses.

D'autres caractéristiques et avantages ressortiront plus clairement de la description qui va suivre, en regard des dessins annexés, d'un exemple de réalisation non limitatif.

La figure 1 représente en perspective une partie d'un bassin d'essais de maquettes navigantes équipé d'une plate-forme mobile comportant un dispositif de mesure selon l'invention.

La figure 1a représente schématiquement en plan, à plus petite échelle, le bassin d'essais de la figure 1.

La figure 2 représente schématiquement, à plus grande échelle, une vue en élévation latérale d'une tête de mesure du dispositif de mesure de la figure 1.

La figure 3 représente, en perspective et à plus grande échelle, le pulvérisateur associé au dispositif de mesure de la figure 1.

La figure 4 illustre le principe de détermination géométrique des variations de la hauteur d'un point de la surface de l'eau du bassin à partir des informations issues d'une tête de mesure de niveau.

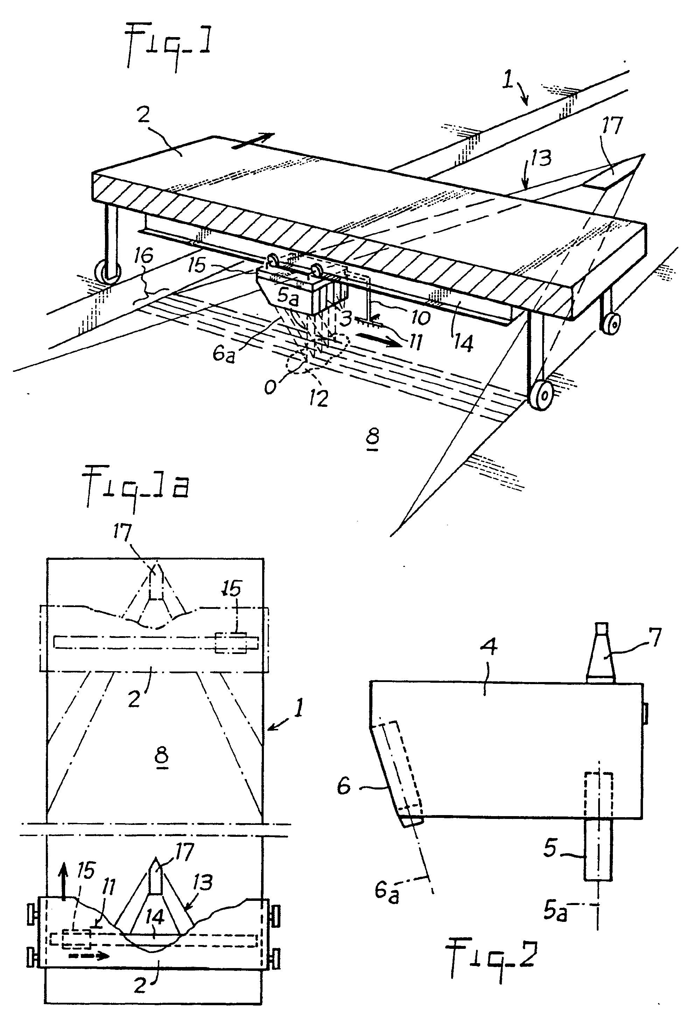

On voit sur la figure 1 une partie d'un bassin d'essais 1 de forme rectangulaire, équipé d'une plate-forme mobile 2 qui l'enjambe sur sa largeur et peut se déplacer suivant sa longueur en poursuivant une maquette d'essais 17 naviguant dans le bassin. Sous la plate-forme 2 est fixée une poutre 14 s'étendant sur la largeur du bassin, le long de laquelle peut se déplacer un chariot 15. Celui-ci supporte un groupe de cinq têtes de mesure 3 conçues pour mesurer le niveau de l'eau dans le bassin en des points qu'elles surplombent, les variations de ce niveau étant liées au sillage 13 de la maquette 17.

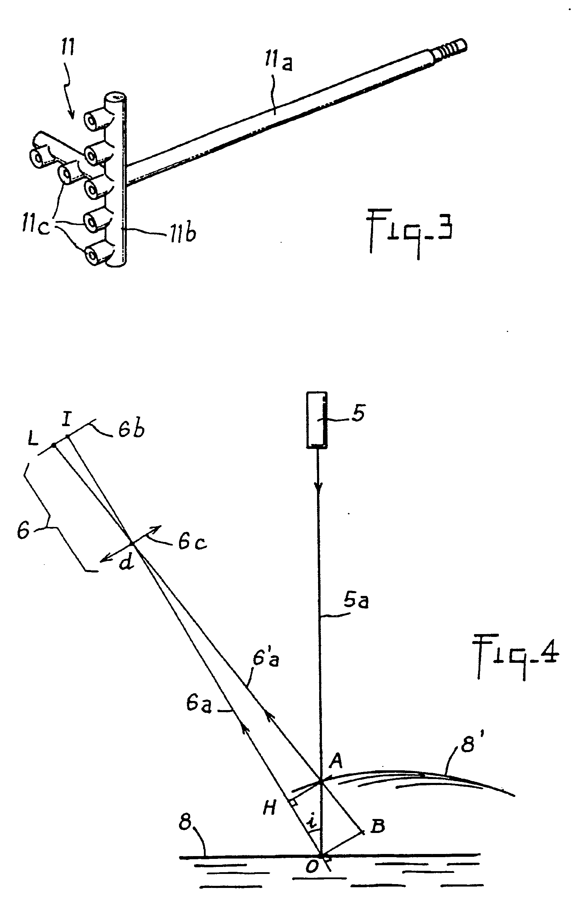

Chacune des têtes de mesure 3 comprend (figure 2), montés dans un boîtier 4, un laser 5 à émission continue et une caméra 6 du type CCD (à couplage de charges) à matrice ou à ligne simple, leurs axes optiques respectifs 5a, 6a étant concourants. Les cinq boîtiers 4 sont juxtaposés sous le chariot 15, dont ils sont rendus solidaires à l'aide d'une queue de fixation 7, en une situation telle que les axes optiques 5a des lasers 5 soient verticaux et contenus dans un même plan parallèle à la direction de déplacement de la plate-forme 2, et que les axes optiques 5a, 6a du laser et de la caméra de chaque tête de mesure 3 convergent en un point O situé au niveau de la surface 8 de l'eau du bassin lorsqu'elle est calme.

A proximité du groupe de têtes de mesure est prévu, fixé au chariot 15 par un tuyau d'alimentation 10 rigide, un pulvérisateur 11 (figures 1 et 3) comportant plusieurs buses 11a susceptibles de pulvériser un liquide à la surface de l'eau du bassin dans une région 12 entourant les points O relatifs aux cinq têtes de mesure 3. Le liquide pulvérisé, qui peut être de l'eau, crée un état "dépoli" de la surface de l'eau favorisant la diffusion de la lumière des faisceaux issus des lasers qui frappent cette surface.

Conformément à la figure 4, lorsque l'eau du bassin est calme, le faisceau issu du laser 5 crée à la surface 8 de l'eau une tache lumineuse au point O, de laquelle la caméra 6 forme une image au centre I de sa surface sensible 6b. En raison du sillage, la surface de l'eau se déforme et vient par exemple en 8' au-dessus de la surface moyenne 8, la tache lumineuse remontant du point O en un point A, tandis que son image sur la surface sensible 6b de la caméra se déplace jusqu'en un point L.

En désignant par d le centre de l'objectif 6c de la caméra 6, i étant l'angle que font les axes optiques 5a et 6a, les triangles rectangles semblables d O B, d H A et d I L et le triangle rectangle O H A permettent d'écrire:

$$OA = \frac{Od.\ IL}{IL.cos\ i\ +\ Id.sin\ i}$$

$$= \frac{n}{n.K_1\ +\ K_2}$$

$$où \quad K_1 = \frac{cos\ i}{Od}\ ,\ K_2 = \frac{Id.sin\ i}{e.Od}\ et\ n = \frac{IL}{e}\ ,$$

e désignant la largeur d'un élément d'image ou pixel sur la surface sensible 6b de la caméra suivant la direction du segment IL.

Du signal issu de la caméra 6, on déduit le nombre n de pixels qu'a couvert l'image de la tache lumineuse lorsque cette dernière s'est déplacée de O à A, ce qui permet de calculer l'élongation OA (à l'aide d'un microprocesseur programmé), connaissant les valeurs des constantes $K_1$ et $K_2$ qui sont fixées par la configuration géométrique du système optique.

On peut donc suivre les déplacements suivant la verticale du point de la surface de l'eau ondulée par le sillage 13 qui est situé à l'aplomb du laser 5. En raison du mouvement imprimé au chariot 15 le long de la poutre 14, ce point se déplace d'un bord à l'autre du bassin 1 dans un plan vertical perpendiculaire à la direction de progression de la maquette 17, ce plan étant en outre fixe par rapport à cette dernière grâce au mouvement de poursuite de la plate-forme. Il s'ensuit que le signal fourni par la tête de mesure considérée est représentatif d'une courbe de niveau correspondant à une coupe de la surface de l'eau par ledit plan vertical. De même, les autres têtes de mesure 3 fournissent des signaux représentatifs de courbes de niveau situées dans des plans verticaux parallèles, voisins les uns des autres.

Ainsi, lorsque le chariot 15 parcourt la poutre 14 tandis que la plate-forme 2 poursuit la maquette 17 en se déplaçant à la même vitesse que celle-ci, les cinq têtes de mesure 3 permettent de dresser cinq courbes de niveau traduisant les ondulations de la surface de l'eau sous l'effet du sillage de la maquette dans une bande transversale 16 située à une distance constante, mais réglable, de la maquette 17.

Il convient en pratique de faire en sorte que le chariot 15 parcoure la longueur de la poutre 14 dans le temps que met la plate-forme 2 pour parcourir la longueur du bassin 1, de sorte que le chariot 15 se déplace sensiblement suivant une diagonale du bassin.

La gestion du système est confiée à un microcalculateur, qui est relié aux cinq têtes de mesure 3 par l'intermédiaire d'une interface électronique conçue pour assurer le contrôle de celles-ci et procéder au transfert des données vers la mémoire vive que comporte le calculateur. Ces données, après traitement, permettent de dresser une véritable carte topographique de la surface de l'eau ridée par le sillage de la maquette navigante.

## Revendications

1. Dispositif de mesure du sillage d'une maquette(17) navigante dans un bassin d'essais équipé d'une plate forme (2) mobile capable de se déplacer pour poursuivre la maquette (17) dans la même direction et à la même vitesse que celle-ci,
caractérisé par le fait qu'il comprend au moins une tête (3) de mesure optique ponctuelle du niveau d'eau porté par la plate-forme (2) et susceptible de se déplacer horizontalement par rapport à celle-ci en une direction transversale par rapport à la direction de son mouvement de poursuite de la maquette (17) de façon à fournir, par balayage transversal, un relevé des ondulations de la surface de l'eau (8) dues au sillage de la maquette (17) dans un plan vertical parallèle à ladite direction transversale.

2. Dispositif selon la revendication 1, caractérisé par le fait que ladite direction transversale est perpendiculaire à la direction du mouvement de poursuite de la plate-forme (2).

3. Dispositif selon la revendication 1 ou 2, caractérisé par le fait qu'il comprend un groupe de plusieurs têtes de mesure (3) juxtaposées suivant la direction du mouvement de poursuite de la plate-forme (2), qui fournissent un relevé desdites ondulations dans autant de plans verticaux parallèles adjacents.

4. Dispositif selon la revendication 3, caractérisé par le fait qu'il comprend un groupe d'au moins quatre têtes de mesure (3) juxtaposées.

5. Dispositif selon l'une quelconque des revendications 1 à 4, caractérisé par le fait que chaque tête de mesure (3) comprend un laser (5) émettant un faisceau lumineux qui frappe la surface de l'eau en y formant une tache lumineuse (A), et une caméra (6) à surface sensible opto-électronique (6b) dont l'axe optique (6a), dirigé vers la position moyenne (O) de ladite tache lumineuse, fait un angle fixe (i) avec le faisceau laser, et qui fournit un signal de sortie traduisant l'écart de l'image (L) de la tache (A) formée sur sa surface sensible (6b) par rapport à son axe optique (6a), ce signal étant traité de manière à en déduire par calcul la hauteur variable (OA) de la tache (A) à la surface de l'eau agitée (8').

6. Dispositif selon la revendication 5, caractérisé par le fait que le faisceau lumineux émis par le laser (5) tombe verticalement sur la surface de l'eau.

7. Dispositif selon la revendication 5 ou 6, caractérisé par le fait que l'axe optique (6a) de la caméra (6) est oblique par rapport à la verticale.

8. Dispositif selon l'une quelconque des revendications 5 à 7, caractérisé par le fait qu'à la tête ou au groupe de têtes de mesure (3) est associé un dispositif pulvérisateur (11) qui projette des gouttelettes de liquide sur la surface de l'eau dans la région de la tache lumineuse ou des taches lumineuses.

## Ansprüche

1. Vorrichtung zur Vermessung des Kielwassers eines auf einem Versuchskanal fahrenden Schiffsmodells (17), wobei der Versuchskanal mit einer fahrenden Plattform (2) für die Verfolgung der Bewegung des Modells (17) in gleicher Richtung und Geschwindigkeit ausgerüstet ist, *dadurch gekennzeichnet*, daß sie mindestens aus einem auf der Plattform für die optische punktförmige Erfassung des Wasserspiegelpegels angebrachten Meßkopf (3) besteht, der sich in waagerechter Richtung quer zur Verfolgungsbewegung des Schiffsmodells (17) bewegt, um durch Querabtastung eine Aufzeichnung der durch das Kielwasser verursachten Schwingungswellen der Wasseroberfläche in einer senkrechten Ebene parallel zur genannten Querrichtung vorzunehmen.

2. Vorrichtung nach Anspruch 1, *dadurch gekennzeichnet*, daß die genannte Querrichtung senkrecht zur Richtung der Verfolgungsbewegung der Plattform (2) liegt.

3. Vorrichtung nach Anspruch 1 oder 2, *dadurch gekennzeichnet*, daß sie aus einem Satz mehrerer nebeneinander in der Richtung der Verfolgungsbewegung der Plattform (2) angeordneter Meßköpfe (3) besteht, die eine Aufzeichnung der genannten Schwingungswellen in ebensovielen nebeneinander liegenden parallelen senkrechten Ebenen vornehmen.

4. Vorrichtung nach Anspruch 3, *dadurch gekennzeichnet*, daß sie aus einem Satz von mindestens vier nebeneinander angeordneten Meßköpfen (3) besteht.

5. Vorrichtung nach einem beliebigen Anspruch 1 bis 4, *dadurch gekennzeichnet*, daß jeder Meßkopf (3) aus einem Laser (5), dessen Lichtstrahl auf der Wasseroberfläche einen Lichtfleck (A) bildet, sowie aus einer Kamera (6) mit opto-elektronischem Sensor (6b) besteht, deren optischen Achse (6a) auf die mittlere Lage (O) des genannten Lichtfleckes unter einem festen Winkel (i) gegenüber dem Laserstrahl gerichtet ist und die aus dem Abstand des Bildes (L) des auf den Sensor (6b) abgebildeten Lichtfleckes (A) von der optischen Achse ein Ausgangssignal ermittelt, wobei das Ausgangssignal entsprechend aufbereitet wird, damit die veränderliche Höhe (OA) des Lichtfleckes (A) auf der bewegten Wasseroberfläche (8') durch Berechnung ermittelt werden kann.

6. Vorrichtung nach Anspruch 5, *dadurch gekennzeichnet*, daß der vom Laser (5) erzeugten Lichtstrahl senkrecht zur Wasseroberfläche gerichtet ist.

7. Vorrichtung nach Anspruch 5 oder 6, *dadurch gekennzeichnet*, daß die optische Achse (6a) der Kamera (6) schief gegenüber der Senkrechte gerichtet ist.

8. Vorrichtung nach einem beliebigen Anspruch 5 bis 7, *dadurch gekennzeichnet*, daß dem Meßkopf oder dem Meßkopfsatz (3) eine Sprühvorrichtung (11) beigeordnet wird, die feine Tröpfchen einer Flüssigkeit auf die Wasseroberfläche im Bereich des oder der Lichtflecke verstreut.

## Claims

1. Device for measuring the wake of a model sailing in a trial tank equipped with a moving platform capable of pursuing the model in the same direction and at the same speed as the model, wherein the said model includes at least one optical measuring head (3) measuring the water level at a local point and carried by the platform (2) and capable of moving horizontally with respect to the said platform in a transverse direction with respect to the direction of its motion of pursuit of the model (17), in such a way as to provide by transverse scanning a measurement of the undulations of the water surface (8) due to the wake of the model (17) in a vertical plane parallel to the said transverse direction.

2. Device according to claim 1, wherein the said transverse direction is perpendicular to the direction of pursuit of the platform (2).

3. Device according to claim 1 or 2, wherein it includes a group of several juxtaposed measuring heads (3) following the pursuing direction of the platform (2), which provides a measurement of the said undulations in as many vertical, parallel and adjacent planes.

4. Device according to claim 3, wherein it includes a group of at least four juxtaposed measuring heads (3).

5. Device according to one of claims 1 to 4, wherein each measuring head (3) includes a laser (5) emitting a light beam that strikes the surface of the water, forming a light spot (A) on it, and one camera (6) with opto-electronic sensitive surface (6b), the optical axis (6a) of which is directed toward the median position (O) of the said light spot, making a fixed angle (i) with the light beam and which provides an output signal expressing the difference between the image (L) of the spot (A) formed on its sensitiive surface (6b) with respect to its optical axis (6a), this signal being processed so as to determine from it by calculation the variable height (OA) of the spot (A) on the surface of the agitated water (8′).

6. Device according to claim 5, wherein the light beam emitted by the laser (5) falls vertically onto the surface of the water.

7. Device according to claim 5 or 6, wherein the optical axis (6a) of camera (6) is oblique with respect to the vertical.

8. Device according to any of claim 5 to 7, wherein the measuring head or group of measuring heads is associated with a spray device (11) which projects droplets of liquid onto the surface of the water in the region of the light spot or spots.

Fig.1

Fig.1a

Fig.2

Fig-3

Fig-4